# DEMANDE DE BREVET EUROPEEN

(11) **EP 0 732 384 A2**
(43) Date de publication de la demande: **18.09.1996**
(21) Numéro de dépôt: 96400053.3
(22) Date de dépôt: 10.01.1996
(51) Int. Cl.: C09J 5/00, B32B 27/08

(54) **Produit composite en élastomère et en thermoplastique, et ses procédés de fabrication**

(30) Priorité: 12.01.1995 FR 9500307
(71) Demandeur: HUTCHINSON, F-75008 Paris (FR)
(72) Inventeur: Frappier, Alain, F-45200 Montargis (FR); Garois, Nicolas, F-45200 Amilly (FR)
(74) Mandataire: Ramey, Daniel

(57) **Abrégé**

Produit composite en thermoplastique et en élastomère, et ses procédés de fabrication, tel qu'un profilé (10) comprenant une armature (24) en thermoplastique incluant un agent modifiant tel qu'un polybutadiène-vinyle-1,2 ou un éthylène-propylène greffé à l'anhydride maléique, une couche mince (26) d'élastomère incorporant un agent modifiant tel qu'un organo-silane ou un éthylène-propylène greffé à l'anhydride maléique, et une lèvre d'étanchéité (14) en élastomère ne comprenant pas d'agent modifiant.

L'invention permet une adhérence totale entre le thermoplastique et l'élastomère.

## Description

L'invention concerne un produit composite réalisé en élastomère et en thermoplastique, et ses procédés de fabrication.

De nombreux produits, utilisés dans des domaines industriels très divers, comprennent des associations métal-élastomère qui permettent de bénéficier d'une part de l'élasticité des élastomères et de leur capacité d'absorber les vibrations et d'autre part de la rigidité et des autres propriétés mécaniques des métaux, ces produits ayant des fonctions générales d'amortissement des vibrations et/ou d'étanchéité.

L'utilisation des métaux dans ces produits présente toutefois un certain nombre d'inconvénients tels que des risques de corrosion et la nécessité d'une protection des parties métalliques découvertes, un défaut d'adhérence naturelle des élastomères sur les métaux, une conductibilité électrique et thermique, une densité élevée, un prix parfois important, une fragilité au pliage des pièces minces, etc...

On a déjà cherché à remplacer les métaux par des thermoplastiques, certains de ces derniers ayant des propriétés mécaniques assez proches de celles des métaux, un prix moins élevé, une densité plus faible, une conductivité électrique ou thermique nulle ou très faible, des risques nuls de corrosion, etc...

On s'est alors heurté essentiellement au problème de l'adhérence entre les thermoplastiques et les élastomères, ce qui a conduit à utiliser des couches intermédiaires de matières adhésives souvent très coûteuses pour obtenir une adhérence plus ou moins bonne entre les thermoplastiques et les élastomères, et qui par ailleurs n'est pas toujours uniforme sur toute l'interface thermoplastique - élastomère.

L'invention a pour but d'éviter ces inconvénients en assurant une adhérence directe et totale entre un thermoplastique et un élastomère sans utilisation d'une ou de couches intermédiaires de matière adhésive ou analogue.

Elle a pour objet des produits composites réalisés en thermoplastique et en élastomère, dans lesquels l'adhérence entre le thermoplastique et l'élastomère est si élevée qu'il est impossible de les séparer sans déchirer l'élastomère.

Elle a également pour objet des procédés de fabrication de ces produits, permettant de les réaliser à faible coût en continu et de façon automatisée par extrusion, ou bien par moulage par injection, compression ou transfert.

Elle propose donc un produit composite en élastomère et en thermoplastique, caractérisé en ce que l'adhérence entre l'élastomère et le thermoplastique à leur interface résulte de l'incorporation d'agents modifiants à l'élastomère et au thermoplastique, les agents modifiants de l'élastomère comprenant un organosilane ou un éthylène-propylène greffé à l'anhydride maleique, et ceux du thermoplastique comprenant un polybutadiène-vinyle-1,2, un éthylène-propylène greffé à l'anhydride maléique ou un organosilane.

Le thermoplastique est un polypropylène ou un polyamide technique tel que PA6, PA66, PA6/10, PA6/12, PA11 ou PA12, ou un alliage polypropylène-polyamide.

L'élastomère est de préférence choisi dans le groupe comprenant le caoutchouc naturel NR, le polyisoprène synthétique IR, les caoutchoucs nitrile hydrogénés HNBR, les copolymères d'épichlorhydrine et d'oxyde d'éthylène ECO, les élastomères éthylène-acrylique commercialisés sous la dénomination "VAMAC", les polyéthylènes chlorosulfonés CSM, les ter-polymères d'éthylène, de propylène et d'un diène EPDM, les caoutchoucs butyle IIR et les caoutchoucs butyle halogénés XIIR.

Dans un tel produit, l'adhérence entre le thermoplastique et l'élastomère est totale au point que toute tentative de séparation du thermoplastique et de l'élastomère se traduit par la destruction du produit.

Avantageusement, le thermoplastique est chargé de fibres organiques ou inorganiques, dans des proportions comprises de préférence entre 5 et 50 % environ en poids.

La partie en thermoplastique peut alors servir d'armature, de renfort, d'insert, de support, etc...

Pour des raisons économiques, on peut, afin de réduire les quantités d'agents modifiants incorporées au thermoplastique et à l'élastomère, prévoir de former une couche mince de thermoplastique comprenant l'agent modifiant entre l'élastomère et une autre couche de thermoplastique ne comprenant pas l'agent modifiant.

De même, on peut prévoir de former une couche mince d'élastomère comprenant l'agent modifiant entre le thermoplastique et une autre couche d'élastomère ne comprenant pas cet agent modifiant.

L'invention propose également un procédé de fabrication d'un produit tel que décrit ci-dessus, caractérisé en ce qu'il consiste à extruder un profilé en thermoplastique comprenant un agent modifiant précité, puis à recouvrir au moins partiellement ce profilé, par extrusion, d'élastomère comprenant un agent modifiant précité, et à vulcaniser l'élastomère.

Un tel procédé a l'avantage de permettre une fabrication en continu, automatisable, peu coûteuse et facile à mettre en oeuvre pour l'homme du métier.

Selon une autre caractéristique de l'invention, ce procédé consiste à coextruder un profilé en thermoplastique ne comprenant pas d'agent modifiant et une couche de thermoplastique comprenant l'agent modifiant, déposée sur au moins une partie dudit profilé, puis à extruder l'élastomère sur ladite couche de thermoplastique comprenant l'agent modifiant.

Selon encore une autre caractéristique de l'invention, le procédé consiste à coextruder, sur le profilé en thermoplastique, une couche intermédiaire d'élastomère comprenant l'agent modifiant et un revêtement d'élastomère ne comprenant pas l'agent modifiant, qui est déposé sur ladite couche intermédiaire d'élastomère.

De préférence, le profilé en thermoplastique est conformé et refroidi avant l'extrusion d'élastomère.

L'invention propose encore un autre procédé de fabrication de ce produit, caractérisé en ce qu'il consiste à mouler une pièce en thermoplastique comprenant un agent modifiant précité, puis à surmouler par injection, compression ou transfert, l'élastomère comprenant un agent modifiant précité sur la pièce en thermoplastique, et à vulcaniser l'élastomère.

Dans un premier mode de réalisation de l'invention, ce procédé consiste à mouler par injection bi-matière une pièce en thermoplastique ne comprenant pas d'agent modifiant et une couche mince de thermoplastique comprenant l'agent modifiant et qui recouvre au moins partiellement la pièce en thermoplastique, avant de surmouler l'élastomère.

Dans une autre forme de réalisation, le procédé consiste à surmouler sur ladite pièce en thermoplastique une couche mince d'élastomère comprenant l'agent modifiant et, sur cette couche mince, un élastomère ne comprenant pas l'agent modifiant.

De façon générale, l'invention présente les avantages suivants :
- adhérence du thermoplastique et de l'élastomère sans interposition d'une ou de plusieurs couches de matières adhésives,
- remplacement du métal dans les associations avec les élastomères,
- allégement des produits,
- conductibilité électrique nulle (sauf dans le cas où l'on incorpore des fibres de carbone dans le thermoplastique),
- résistance à la flexion et à la fatigue mécanique,
- prix des produits inférieur à ceux des produits équivalents comprenant une association métal-élastomère,
- conductibilité thermique très faible,
- absence totale de corrosion,
- très bonne tenue thermique aux températures d'utilisation.

L'invention trouve de nombreuses applications dans des domaines très divers, comme par exemple des supports de moteurs ou d'organes vibrants dans l'industrie en général et dans les engins mobiles (véhicules automobiles, avions, navires, etc...), des profilés d'étanchéité utilisables dans tous les domaines, des joints statiques ou dynamiques utilisables dans toutes les industries, des supports antivibratoires utilisables dans tous les domaines, et est également applicable dans les pneumatiques, dans le textile et dans la chaussure.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 est une vue schématique en coupe, à grande échelle, d'un profilé d'étanchéité selon l'invention ;
la figure 2 est une vue agrandie du détail encerclé II de la figure 1 ;
la figure 3 est une vue schématique en coupe d'un autre produit selon l'invention ;
la figure 4 est une vue schématique partielle en coupe d'encore un autre produit selon l'invention ;
la figure 5 représente schématiquement des moyens de fabrication d'un produit selon l'invention.

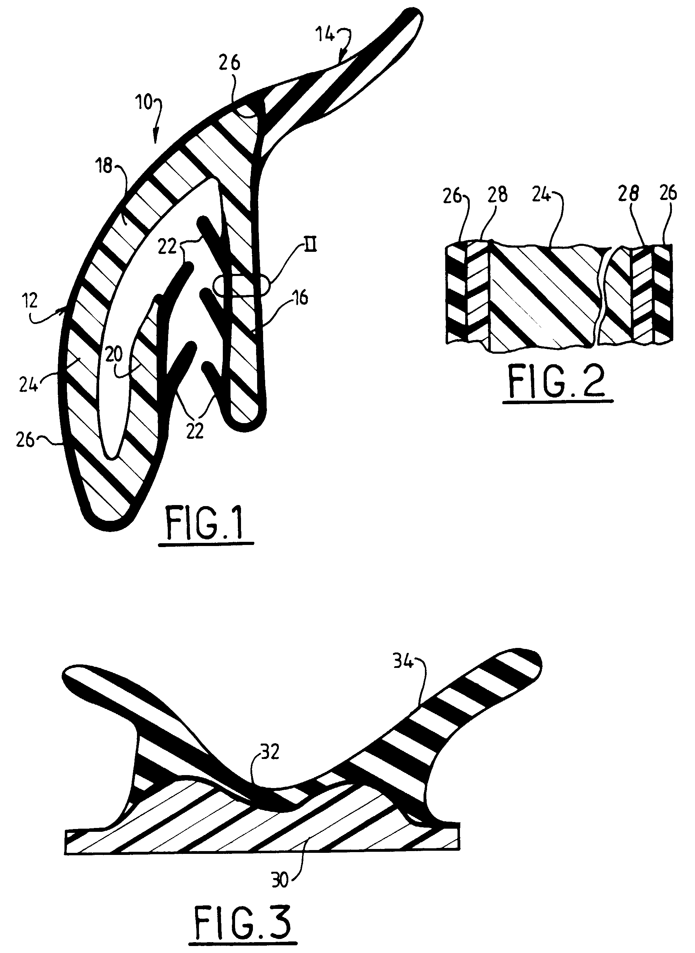

On se réfère d'abord aux figures 1 et 2, où l'on a représenté une première forme de réalisation d'un produit selon l'invention, qui est ici un profilé d'étanchéité utilisable comme "joint lécheur" dans l'industrie automobile et qui, dans la technique antérieure, comprend une armature métallique à section en U complètement enrobée d'élastomère, avec tous les inconvénients rappelés ci-dessus.

Ce profilé 10 comprend une partie 12 de montage sur un support tel que le bord d'une tôle, et une lèvre d'étanchéité 14 destinée à s'appliquer sur une vitre mobile.

La partie 12 est approximativement à section U comprenant une première branche rectiligne 16 et une seconde branche incurvée 18 dont une extrémité 20 est repliée à 180° à l'intérieur de la partie 12, en regard de la première branche 16, les faces en regard de la première branche 16 et de l'extrémité repliée 20 comportant des lèvres ou languettes 22 orientées vers l'intérieur du U et s'opposant à l'arrachement du profilé 10 monté sur son support, d'une façon bien connue de l'homme du métier.

Cette configuration permet de fixer le profilé 10 sur son support par effet de serrage ou de pince de la partie 12 sur le support.

Essentiellement, la partie 12 du profilé est constituée d'une armature 24 en thermoplastique relativement rigide, qui est revêtue sur la majeure partie de son étendue d'une couche mince 26 d'élastomère ayant des fonctions d'aspect et d'étanchéité, et qui constitue également la lèvre 14 et les lèvres ou languettes 22 précitées.

La matière utilisée pour l'armature 26 est de préférence un polypropylène ou un polyamide technique, tel que PA6, PA66, PA6/10, PA6/12, PA11 ou PA12, ou un alliage PP-PA, chargé de préférence de fibres inorganiques (par exemple de silice, de verre, de céramique ou de carbone) ou organiques (par exemple de méta- ou para-aramide, de polyamide, de polymères à cristaux liquides), dans des quantités qui peuvent varier de 5 à 50 % en poids environ selon les caractéristiques mécaniques recherchées de l'armature 26.

L'élastomère constituant la couche mince 26 de revêtement, la lèvre 14 et les lèvres ou languettes 22, est de préférence choisi dans le groupe comprenant NR, IR, HNBR, ECO, "VAMAC", CSM, EPDM, IIR et XIIR, qui sont des élastomères à vulcanisation au soufre ou aux peroxydes organiques.

Une adhérence parfaite et totale entre l'élastomère et le thermoplastique est obtenue par incorporation d'agents modifiants à l'élastomère et au thermoplastique, dans des proportions inférieures à 10 % en poids, l'agent modifiant du thermoplastique étant de l'éthylène-propylène greffé à l'anhydride maléique ou bien du polybutadiène-vinyle-1,2 ou encore un silane, le modifiant de l'élastomère étant un organo-silane ou un éthylène-propylène greffé à l'anhydride maléique (étant entendu qu'il n'est pas nécessaire d'utiliser le même modifiant pour le thermoplastique et pour l'élastomère).

De préférence, les modifications de l'élastomère sont à base d'organo-silane, avec ou sans polybutadiène-vinyle-1,2, et les modifications du thermoplastique (PA ou alliage PA - PP) sont à base de polybutadiène-vinyle-1,2.

On peut, par exemple, utiliser comme élastomère un EPDM ayant la composition suivante :

| | |
|---|---|
| EPDM | 100 parts |
| Plastifiant paraffinique | 50 parts |
| Oxyde de zinc | 5 parts |
| Noir de carbone | 70 parts |
| Co-agent de vulcanisation | 1 part |
| Vinylsilane | 10 parts |
| (ou E-P greffé à l'anhydride maléique) | |
| BR-vinyle-1,2 | 5 parts |
| Peroxyde | 10 parts |

L'adhérence de cet EPDM sur les polyamides comprenant un agent modifiant précité, est totale.

Des essais de résistance au pelage ont été réalisés sur des produits selon l'invention et ont donné des résultats très satisfaisants, résumés ci-dessous :

| | | |
|---|---|---|
| Thermoplastique = | PA66 + EP greffé | PA66 + BR - vinyle-1,2 |
| Elastomère = EPDM + organo-silane | 0,6 | 3,6 (R) |
| EPDM + EP greffé | 2,6 (R) | 2,5 (R) |
| ECO vulcanisé aux péroxydes + organo-silane | 1,2 (R) | 2,5 (R) |

Les résistances au pelage sont données en daN/cm. (R) signifie qu'il y a eu rupture du produit, sans séparation à l'interface élastomère - polyamide. EP greffé est une abréviation désignant l'éthylène-propylène greffé à l'anhydride maléique.

De préférence, et comme on l'a représenté schématiquement en figure 2, on peut réaliser l'armature 24 en thermoplastique ne comprenant pas d'agent modifiant précité et recouvrir ses parties qui devront être associées à l'élastomère, par une couche mince 28 du même thermoplastique comprenant l'agent modifiant précité. Cela permet de réduire le prix de revient du profilé 10, en évitant d'incorporer l'agent modifiant à toute l'armature 24.

De même, en ce qui concerne l'élastomère, on peut n'incorporer l'agent modifiant correspondant qu'à la couche mince 26 qui recouvre l'armature 24 et ne pas incorporer cet agent modifiant dans la lèvre d'étanchéité 14, à condition de laisser subsister la couche mince 26 entre cette lèvre et l'armature 24 en thermoplastique.

La figure 3 représente schématiquement un autre produit selon l'invention, qui n'est plus un profilé, mais une pièce moulée, comprenant un support 30 en thermoplastique tel que du polypropylène ou l'un des polyamides techniques précités ou un alliage PP-PA, sans agent modifiant précité, une couche mince 32 du même thermoplastique comprenant un agent modifiant précité et recouvrant la face supérieure ondulée du support 30, et une partie 34 en élastomère comprenant un agent modifiant précité, qui est solidaire de la couche mince 32 sur la majeure partie de l'étendue de celle-ci.

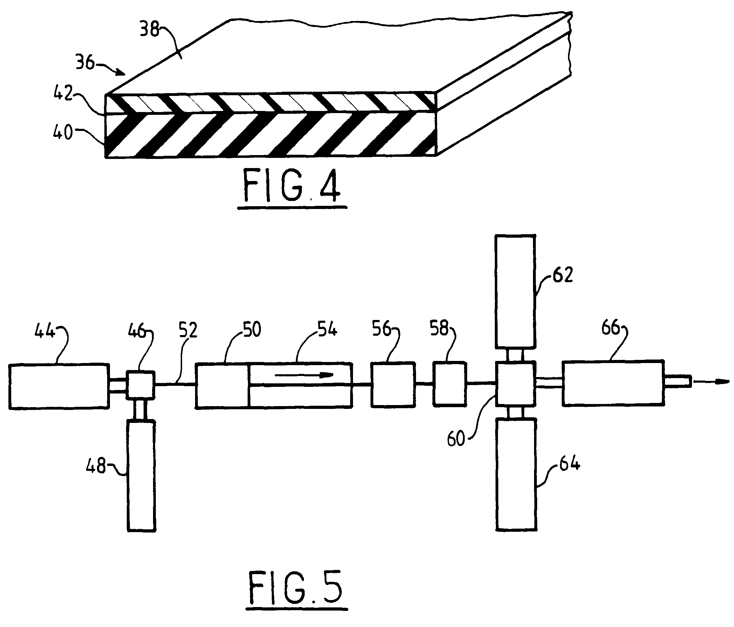

Dans une autre forme de réalisation représentée en figure 4, le produit selon l'invention peut se présenter sous forme d'une plaque ou d'un panneau 36 comprenant une couche 38 de thermoplastique comprenant l'agent modifiant précité, et une épaisseur 40 d'élastomère solidaire de la couche 38, l'élastomère comprenant l'agent modifiant précité, ou bien en étant dépourvu et étant alors relié à la couche 38 de thermoplastique par une couche mince 42 d'élastomère comportant l'agent modifiant, formée à l'interface entre les couches 38 et 40.

Les produits selon l'invention, tel que celui de la figure 3, peuvent être réalisés par moulage par exemple par injection, de la façon suivante :
on commence par mouler par injection la partie 30 en thermoplastique ne comprenant pas d'agent modifiant et la couche mince 32 comprenant l'agent modifiant, par injection bi-matière dans le même moule.

La pièce en thermoplastique 30, 32 peut ensuite être démoulée et placée dans un autre moule où on réalise le surmoulage de la partie 34 par injection d'élastomère comprenant l'agent modifiant, et on procède ensuite à la vulcanisation de cet élastomère, par chauffage dans le moule de surmoulage.

En variante, on peut bien entendu mouler le support 30 en thermoplastique comprenant un agent modifiant, puis surmouler sur le support la partie 34 en élastomère comprenant un agent modifiant.

Selon une autre variante, on peut également surmouler, par injection bi-matière, une couche mince d'élastomère comprenant l'agent modifiant sur la pièce en thermoplastique, avec une autre couche d'élastomère ne comprenant pas d'agent modifiant et qui vient recouvrir la couche mince précitée.

Quand les produits selon l'invention sont réalisés par moulage, avec vulcanisation de l'élastomère par chauffage dans le moule, on utilise de préférence un élastomère avec vulcanisation par des peroxydes organiques. La vulcanisation est alors une réaction radicalaire en trois étapes (décomposition des peroxydes, amorce des chaînes polymères et réticulation) qui permet d'introduire dans les couches d'interface des radicaux libres qui rendent réactifs des sites autrement stables.

Par ailleurs, la pression de moulage améliore encore l'adhérence de l'élastomère sur le thermoplastique.

Les produits selon l'invention peuvent également être réalisés par extrusion, par exemple au moyen du dispositif représenté schématiquement en figure 5.

Ce dispositif comprend une extrudeuse 44 de thermoplastique, dont la sortie est reliée à une tête d'extrusion 46 également alimentée par une autre extrudeuse 48 de thermoplastique, la tête d'extrusion 46 étant suivie par un conformateur ou calibreur 50 dans lequel on fait passer le profilé 52 sortant de la tête d'extrusion 46, le conformateur ou calibreur 52 étant lui-même suivi d'un bac de refroidissement 54.

En aval de ce bac est disposé un système 56 de séchage, suivi de moyens de tirage 58.

On trouve ensuite une tête d'équerre 60 pour le recouvrement du profilé 52 par de l'élastomère, la tête 60 étant alimentée par deux extrudeuses d'élastomère 62 et 64 respectivement.

La sortie de la tête 60 alimente des moyens 66 de vulcanisation de l'élastomère en continu ou en discontinu.

Le profilé 10 représenté aux figures 1 et 2 peut être fabriqué par le dispositif de la figure 5.

Dans ce cas, l'extrudeuse 44 fournit le thermoplastique ne comprenant pas d'agent modifiant, destiné à former l'armature 24, tandis que l'extrudeuse 48 fournit le même thermoplastique auquel on a incorporé un agent modifiant précité, pour former la couche mince 28 recouvrant l'armature 24 ou au moins les parties de celle-ci destinées à recevoir la couche 26 d'élastomère.

Le profilé 52 sortant de la tête d'extrusion 46 est donc constitué par l'armature 24 revêtue de la couche mince 28 de thermoplastique modifié.

Lorsque le thermoplastique non modifié qui constitue l'armature 24 est chargé de fibres, par exemple de fibres de verre, la couche mince 28 de thermoplastique modifié qui recouvre cette armature ne comprend pas de fibres, ce qui réduit de façon importante l'usure du conformateur ou calibreur 50 dans lequel passe le profilé 52 avant d'être refroidi.

Le profilé, séché et tiré, est ensuite amené à la tête 60 où une couche mince 26 d'élastomère modifié est déposée sur la couche mince 28 de thermoplastique modifié et où la lèvre d'étanchéité 14 en élastomère non modifié est formée sur une partie de cette couche mince 26.

La vulcanisation de l'élastomère dans les moyens 66 est réalisée par chauffage, sans pression.

De façon générale, les thermoplastiques utilisés dans l'invention sont choisis pour répondre aux conditions suivantes :
- ils ont une température de déformation sous charge qui est supérieure à 140°C environ (température de vulcanisation des élastomères),
- leur composition moléculaire est compatible avec celle des élastomères,
- leur prix est faible, faible,
- ils ont une rigidité proche de celle des métaux,
- ils sont extrudables et injectables,
- leurs résistances physico-chimiques sont conformes aux cahiers des charges de l'industrie,
- ils ont une dureté élevée,
- leur densité est faible (inférieure à 1,5),
- ils ont une bonne stabilité dimensionnelle, un faible retrait (par exemple moins de 0,5 %) et un faible coefficient de dilatation thermique.

Ils remplacent avantageusement les métaux dans les associations avec les élastomères, et présentent l'avantage supplémentaire d'être facilement déformables et conformables par chauffage à température moyenne.

## Revendications

1. Produit composite en élastomère et en thermoplastique, caractérisé en ce que l'adhérence entre l'élastomère et le thermoplastique à leur interface résulte de l'incorporation d'agents modifiants à l'élastomère et au thermoplastique, les agents modifiants de l'élastomère comprenant un organo-silane ou un éthylène-propylène greffé à l'anhydride maléique et ceux du thermoplastique comprenant un polybutadiène-vinyle-1,2, un éthylène-propylène greffé à l'anhydride maléique ou un organo-silane.

2. Produit selon la revendication 1, caractérisé en ce que l'agent modifiant de l'élastomère comprend un organo-silane et du polybutadiène-vynile-1,2.

3. Produit selon la revendication 1 ou 2, caractérisé en ce que le thermoplastique est un polypropylène ou polyamide technique tel que PA6, PA66, PA6/10, PA6/12, PA11 ou PA12, ou un alliage polypropylène-polyamide.

4. Produit selon la revendication 1, 2 ou 3, caractérisé en ce que le thermoplastique est chargé de fibres organiques ou inorganiques, dans des proportions comprises entre 5 et 50 % environ en poids.

5. Produit selon l'une des revendications précédentes, caractérisé en ce que l'élastomère est choisi dans le groupe comprenant NR, IR, HNBR, ECO, CSM, EPDM, IIR, XIIR, et les élastomères éthylène-acrylique commercialisés sous la dénomination "VAMAC", à vulcanisation au soufre ou aux peroxydes organiques.

6. Produit selon l'une des revendications précédentes, caractérisé en ce que les quantités d'agents modifiants incorporés au thermoplastique et à l'élastomère sont inférieures à 10 % en poids.

7. Produit selon l'une des revendications précédentes, caractérisé en ce que le thermoplastique comprenant l'agent modifiant forme une couche mince (28) entre l'élastomère (26) et un thermoplastique (24) ne comprenant pas l'agent modifiant.

8. Produit selon l'une des revendications précédentes, caractérisé en ce que l'élastomère comprenant l'agent modifiant forme une couche mince (26) entre le thermoplastique (24) et un élastomère ne comprenant pas l'agent modifiant.

9. Produit selon l'une des revendications précédentes, caractérisé en ce que le thermoplastique constitue une armature (24), un renfort, un insert ou un support (30) dudit produit.

10. Procédé de fabrication d'un produit tel que décrit dans l'une des revendications précédentes, caractérisé en ce qu'il consiste à extruder un profilé (52) comprenant un agent modifiant précité, puis à recouvrir au moins partiellement ce profilé par extrusion d'élastomère comprenant un agent modifiant précité et à vulcaniser l'élastomère.

11. Procédé selon la revendication 10, caractérisé en ce qu'il consiste à coextruder un profilé en thermoplastique (24) ne comprenant pas d'agent modifiant et une couche (28) de thermoplastique comprenant l'agent modifiant, déposée sur au moins une partie dudit profilé (24), puis à extruder l'élastomère (26, 14) sur ladite couche de thermoplastique (28) comprenant l'agent modifiant.

12. Procédé selon la revendication 10 ou 11, caractérisé en ce qu'il consiste à coextruder, sur le profilé en thermoplastique, une couche intermédiaire (26) d'élastomère comprenant l'agent modifiant, et un élastomère ne comprenant pas l'agent modifiant, déposé sur ladite couche intermédiaire (26) d'élastomère.

13. Procédé selon une des revendications 10 à 12, caractérisé en ce qu'il consiste à conformer et à refroidir le profilé (52) en thermoplastique avant d'extruder l'élastomère.

14. Procédé de fabrication d'un produit tel que décrit dans l'une des revendications 1 à 9, caractérisé en ce qu'il consiste à mouler une pièce en thermoplastique comprenant un agent modifiant précité, puis à surmouler un élastomère comprenant l'agent modifiant précité sur la pièce en thermoplastique, et à vulcaniser l'élastomère.

15. Procédé selon la revendication 14, caractérisé en ce qu'il consiste à mouler par injection bi-matière une pièce (30) en thermoplastique ne comprenant pas d'agent modifiant et une couche mince (32) de thermoplastique comprenant l'agent modifiant et qui recouvre au moins partiellement la pièce (30) en thermoplastique, avant de surmouler l'élastomère.

16. Procédé selon la revendication 14 ou 15, caractérisé en ce qu'il consiste à surmouler sur ladite pièce en thermoplastique une couche mince d'élastomère comprenant l'agent modifiant et, sur cette couche mince, une autre couche d'élastomère ne comprenant pas l'agent modifiant.
